# FASCICULE DE BREVET EUROPEEN

(11) **EP 3 737 732 B1**
(45) Date de publication et mention de la délivrance du brevet: **01.06.2022**
(21) Numéro de dépôt: 19708231.6
(22) Date de dépôt: 09.01.2019
(51) Int. Cl.: C09K 11/77, G01T 1/202

(54) **MATÉRIAU SCINTILLATEUR COMPRENANT UN HALOGÉMURE D'ALCALINO-TERREUXCRISTALLIN DOPÉ PAR UN ACTIVATEUR ET CO-DOPÉ PAR SM2+**
SZINTILLATORMATERIAL, DAS EIN KRISTALLINES ERDALKALIHALOGENID ENTHÄLT, DAS MIT EINEM AKTIVATOR DOTIERT UND MIT SM2+ CO-DOTIERT IST
SCINTILLATOR MATERIAL COMPRISING A CRYSTALLINE ALKALINE-EARTH HALIDE DOPED WITH AN ACTIVATOR AND CO-DOPED WITH SM2+

(30) Priorité: 11.01.2018 FR 1850233; 11.01.2018 FR 1850234
(43) Date de publication de la demande: 18.11.2020
(73) Titulaire: Stichting voor de Technische Wetenschappen, 3527 JP Utrecht (NL); UNIVERSITE DE BERNE, CH-3012 Berne (CH)
(72) Inventeur: DORENBOS, Pieter, 2281GM RIJSWIJK (NL); KRÄMER, Karl, 3012 BERN (CH); ALEKHIN, Mikhail, 5654KW EINDHOVEN (NL)
(74) Mandataire: Saint-Gobain Recherche
(86) Numéro de dépôt international: PCT/EP2019/050454
(87) Numéro de publication internationale: WO 2019/137961

(56) Documents cités:
- FR-A1- 2 287 058
- US-A- 3 988 252
- US-A- 4 261 854
- US-A1- 2007 272 898
- DATABASE INSPEC [Online] THE INSTITUTION OF ELECTRICAL ENGINEERS, STEVENAGE, GB; avril 1962 (1962-04), FEOFILOV P P: "Phototransfer of an electron in MeF2; Eu, Sm monocrystals", XP002784960, Database accession no. 1963A00951 & OPTIKA I SPEKTROSKOPIA USSR, vol. 12, no. 4, 1 avril 1962 (1962-04-01), pages 531-533,
- DATABASE MEDLINE [Online] US NATIONAL LIBRARY OF MEDICINE (NLM), BETHESDA, MD, US; avril 2016 (2016-04), SU YIGUO ET AL: "Ce3+ and Ln3+ (Ln = Dy, Eu, Sm, Tb) Codoped SrF2 Nanoparticles: Synthesis and Multicolor Light Emission.", XP002784961, Database accession no. NLM27451745 & JOURNAL OF NANOSCIENCE AND NANOTECHNOLOGY APR 2016, vol. 16, no. 4, avril 2016 (2016-04), pages 3956-3960, ISSN: 1533-4899
- DATABASE INSPEC [Online] THE INSTITUTION OF ELECTRICAL ENGINEERS, STEVENAGE, GB; April 1962 (1962-04), FEOFILOV P P: "Phototransfer of an electron in MeF2; Eu, Sm monocrystals", Database accession no. 1963A00951 & OPTIKA I SPEKTROSKOPIA USSR, vol. 12, no. 4, April 1962 (1962-04), pages 531-533,
- DATABASE MEDLINE [Online] US NATIONAL LIBRARY OF MEDICINE (NLM), BETHESDA, MD, US; April 2016 (2016-04), SU YIGUO ET AL: "Ce3+ and Ln3+ (Ln = Dy, Eu, Sm, Tb) Codoped SrF2 Nanoparticles: Synthesis and Multicolor Light Emission.", Database accession no. NLM27451745 & SU YIGUO ET AL: "Ce3+ and Ln3+ (Ln = Dy, Eu, Sm, Tb) Codoped SrF2 Nanoparticles: Synthesis and Multicolor Light Emission.", JOURNAL OF NANOSCIENCE AND NANOTECHNOLOGY APR 2016, vol. 16, no. 4, April 2016 (2016-04), pages 3956-3960, ISSN: 1533-4899

## Description

L'invention concerne le domaine des scintillateurs pouvant équiper les détecteurs de radiations ionisantes comme les rayonnements X et gamma et les particules ionisantes.

Les radiations ionisantes (ce qui inclut les particules ionisantes comme notamment les protons, neutrons, électrons, muons, particules alpha, ions, et les rayonnements X ou gamma) sont habituellement détectées à l'aide de monocristaux scintillateurs convertissant les radiations incidentes en lumière, laquelle est alors transformée en un signal électrique à l'aide d'un photo-détecteur comme un photomultiplicateur. Les scintillateurs utilisés peuvent notamment être en monocristal d'iodure de sodium dopé au thallium (noté par la suite NaI(TI)), d'iodure de césium dopé au thallium ou au sodium, d'halogénure de lanthane dopé au cérium ou au praséodyme. Les cristaux à base d'halogénure de lanthane ont fait l'objet de travaux publiés notamment sous US7067815, US7067816, US2005/188914, US2006/104880, US2007/241284.

Les scintillateurs inorganiques utilisés habituellement sont cristallins, et très souvent monocristallins. Pour détecter efficacement les rayonnements ionisant, ils sont de préférence de taille relativement importante, c'est-à-dire de volume supérieur à 1 cm³ afin d'augmenter la probabilité de rencontre entre des photons radiatifs de haute énergie et le matériau scintillateur. Cependant, il convient également que le scintillateur absorbe le moins possible la lumière qu'il émet lui-même pour garantir l'émission par le scintillateur d'une intensité lumineuse suffisante (phénomène dit d'auto-absorption ou « self-absorption » en anglais), nécessaire à l'obtention d'une bonne résolution énergétique. Il peut parfois être difficile d'avoir un scintillateur de grand volume et peu auto-absorbant. Le SrI₂ dopé par l'Europium (Eu) est un scintillateur attractif présentant une haute intensité de scintillation, jusqu'à 120,000 photons/MeV, une bonne résolution énergétique (2,8% pour 662 keV en détection gamma) et un decay time de 1,2 µs. Cependant, la scintillation a lieu vers 430 nm (couleur bleu), une longueur d'onde à laquelle le scintillateur est fortement auto-absorbant, ce qui détériore fortement la résolution énergétique des détecteurs l'utilisant.

Les halogénures de terre rare tels que LaBr₃:Ce ou LaCl₃:Ce ou les silicates Lu₂SiO₅ :Ce et (Lu,Y)₂SiO₅ :Ce sont des scintillateurs à forte intensité lumineuse et absorbant peu leur propre lumière. Cependant, ils contiennent des isotopes radioactifs perturbant la mesure précise des radiations ionisantes.

Alekhin et al (Journal of Luminescence 167 (2015) 347-351) a donné des propriétés de scintillation de SrI₂:Sm²⁺, ce cristal étant sujet à moins d'auto-absorption que SrI₂:Eu²⁺. Cependant le SrI₂:Sm²⁺ présente une faible intensité de scintillation.

On a maintenant trouvé qu'il était possible de conserver la bonne intensité de scintillation d'un halogénure d'alcalino-terreux cristallin en conservant le dopant distinct de Sm²⁺ activant sa scintillation, mais en réduisant très fortement le problème de l'auto-absorption grâce au déplacement du maximum de la longueur d'onde d'émission de la scintillation vers un domaine (supérieur à 670 nm) dans lequel cette absorption est quasi-nulle, et ce, en co-dopant le matériau par le Samarium (Sm²⁺). Un phénomène de transfert d'énergie résonnante des ions du dopant vers le co-dopant pourrait expliquer ce comportement. Un co-dopage par Sm²⁺ déplace le pic d'émission de lumière de scintillation vers 770 nm. A cette longueur d'onde, l'auto-absorption de la lumière émise par le scintillateur est très faible et même quasi-nulle. Ces scintillateurs sont de plus dépourvus de radioactivité intrinsèque considérée comme parasite pour les mesures de scintillation de source de rayonnement extérieur.

Le matériau scintillateur selon l'invention est un objet apte à être placé dans un détecteur de radiations ionisantes. Ce matériau scintillateur est de volume supérieur à 1 cm³ afin d'augmenter la probabilité de rencontre entre des photons radiatifs de haute énergie et lui-même. Pour la même raison, son épaisseur est de préférence d'au moins 1,8 mm dans toutes les directions, et généralement d'au moins 2,0 mm dans toutes les directions. Ce matériau est généralement d'au moins 1,8 mm et même d'au moins 2,0 mm dans deux directions orthogonales entre elles, et d'au moins 4 mm et même d'au moins 8 mm dans une direction orthogonale aux deux premières. Le matériau selon l'invention est transparent ou translucide vis-à-vis de la lumière qu'il émet lui-même. Notamment, son coefficient d'absorption optique est inférieur à 50% pour la longueur d'onde à laquelle son émission de scintillation est maximale. Le matériau est transparent pour sa propre lumière émise à au moins 2 mm de profondeur et généralement au moins 4 mm de profondeur et généralement au moins 4 mm de profondeur. Un caractère monocristallin du matériau scintillateur selon l'invention est favorable pour sa bonne transparence.

Le matériau scintillateur selon l'invention est utilisable dans un détecteur de radiations ionisantes. Ce matériau reçoit les radiations ionisantes, ce qui le fait émettre une lumière de scintillation, laquelle est détectée par un photo-détecteur adapté couplé au matériau scintillateur. Bien entendu, il convient d'utiliser un photo-détecteur sensible aux longueurs d'ondes de scintillation. Dans le cadre de la présente invention, le photo-détecteur est de préférence sensible dans le domaine de longueur d'onde supérieur à 670 nm, notamment à 770 nm. Le photodétecteur peut notamment comprendre une photo-diode à avalanche ou un SiPMR (Silicon photomultiplier red sensible) ou un red-extended PMT (photomultiplied tube).

L'invention concerne un matériau scintillateur comprenant un halogénure d'alcalino-terreux cristallin, lequel comprend au moins un alcalino-terreux choisi parmi Mg, Ca, Sr, Ba, ledit halogénure d'alcalino-terreux étant dopé par au moins un dopant activateur de sa scintillation distinct du Samarium (Sm²⁺) (pouvant être simplement appelé « dopant » dans la présente demande), et co-dopé par Sm²⁺. Généralement, le matériau scintillateur consiste en l'halogénure d'alcalino-terreux cristallin dopé et co-dopé.

L'halogénure d'alcalino-terreux cristallin peut comprendre au moins deux alcalino-terreux choisis parmi Mg, Ca, Sr, Ba. Le Sr est un alcalino-terreux préféré. L'halogénure d'alcalino-terreux comprend au moins un halogène choisi parmi Br, Cl, I et au moins 60 mol% et de manière encore préférée au moins 80 mol% des atomes d'halogène de l'halogénure d'alcalino-terreux sont choisis parmi Br, Cl, I. L'halogénure d'alcalino-terreux peut comprendre au moins deux halogènes (notamment I et Cl, ou I et Br), voire trois halogènes choisis parmi Br, Cl, I. L'halogénure d'alcalino-terreux peut ne pas comprendre F. De préférence l'halogénure d'alcalino-terreux est dopé par au moins un dopant activateur de sa scintillation choisi parmi l'Europium (Eu²⁺), le Cérium (Ce³⁺), le Praséodyme (Pr³⁺), le Thallium (TI⁺), l'Ytterbium (Yb²⁺). L'Europium (Eu²⁺) est un dopant activateur préféré.

Dans le cadre de la présente invention, le matériau scintillateur peut avoir une formule dans laquelle le rapport entre cations et anions s'écarte de la stoechiométrie, sous forme de lacunes d'anion ou de cation dans le réseau cristallin.

L'halogénure d'alcalino-terreux comprend des halogénures de cations. Ces cations sont l'alcalino-terreux (ce qui recouvre la possibilité d'avoir un mélange de plusieurs alcalino-terreux), le cation du dopant (comme Eu²⁺), le cation du co-dopant Sm²⁺, l'éventuel alcalin (ce qui recouvre la possibilité d'avoir un mélange de plusieurs alcalins). Les anions sont les halogènes. Quand on dit qu'un cation Z est présent à raison de x mol% dans l'halogénure d'alcalino-terreux, x est égal à 100 fois le rapport du nombre de moles de Z divisé par la somme du nombre de moles de tous les cations, y compris Z. Notamment, au moins un dopant est généralement présent dans l'halogénure d'alcalino-terreux à raison de plus de 0,2 mol%. Généralement, la somme des pourcentages de tous les dopants présents dans l'halogénure d'alcalino-terreux représente plus de 0,2 mol%. Généralement, au moins un dopant peut être présent dans l'halogénure d'alcalino-terreux à raison de moins de 20 mol% et plus généralement de moins de 10 mol%. Généralement, la somme des pourcentages de tous les dopants présents dans l'halogénure d'alcalino-terreux représente moins de 20 mol% et plus généralement moins de 10 mol%. Notamment, Eu²⁺ peut être présent dans l'halogénure d'alcalino-terreux en tant que dopant. Notamment, Eu²⁺ peut être le seul dopant présent. Eu²⁺ peut être présent dans l'halogénure d'alcalino-terreux notamment à raison de plus de 0,2 mol% et généralement de moins de 20 mol% et plus généralement de moins de 10 mol%. Notamment, Sm²⁺ est généralement présent dans l'halogénure d'alcalino-terreux à raison de plus de 0,01 mol% et généralement de plus de 0,1 mol%. Généralement, Sm²⁺ peut être présent dans l'halogénure d'alcalino-terreux à raison de moins de 10 mol%, notamment de moins de 2 mol%.

Notamment, le matériau selon l'invention peut être tel que l'halogénure d'alcalino-terreux comprend de l'iodure de strontium. Notamment Dans ce cas, notamment, le matériau peut comprendre Eu²⁺ en tant que dopant activateur de sa scintillation.

L'halogénure d'alcalino-terreux peut comprendre de l'iodure de strontium, Eu²⁺ étant présent en tant que dopant activateur de scintillation dans l'halogénure d'alcalino-terreux généralement à raison de plus de 0,2 mol% et généralement de moins de 20 mol% et plus généralement de moins de 10 mol%, Sm²⁺ étant présent dans l'halogénure d'alcalino-terreux généralement à raison de plus de 0,01 mol% et généralement de plus de 0,1 mol% et généralement de moins de 10 mol% et plus généralement de moins de 2 mol%.

L'halogénure d'alcalino-terreux peut ne pas comprendre d'alcalin. Cependant, il peut comprendre au moins un alcalin, auquel casil est sous forme d'halogénure. Au moins un alcalin est de préférence choisi parmi : Li, Na, Rb, ou Cs.

Le matériau selon l'invention peut notamment être du type « matrice » dopée par un dopant et co-dopé par le co-dopant (Sm²⁺), le dopant et le codopant étant ceux déjà décrit plus haut et présents dans les quantités décrites plus haut, la matrice pouvant être choisie dans la liste suivante :
- SrBrI , SrI₂, CaBr₂ , CaI₂ , CaClBr ;
- Rb₂BaBr₄ , Cs₂BaBr₄ ;
- CsSrBr₃ , RbCaBr₃ , CsCaBr₃ , CsSrCl₃ , CsCaCl₃ , CsCaI₃ , KCaBr₃ , CsSrI₃, KCaI₃, KMgBr₃ , CsMgBr₃ , CsMgI₃ ;
- KSr₂Br₅ , RbBa₂I₅, KBa₂I₅ , CsBa₂I₅ , KSr₂I₅ , RbSr₂I₅, KSr₂I₅ , RbLn₂I₅ dans laquelle Ln est au moins un élément choisi parmi Yb, Eu, Nd, Dy, Tm ;
- EuBr₂ , EuI₂, YbBr₂ , YbI₂ .

Notamment, le matériau scintillateur selon l'invention peut être l'un de ceux de la liste suivante :
- sr_{(1-x-y)}EuₓSM_{y}I₂ dans laquelle 0<x<0,2 et 0<y<0,1 ;
- Sr_{(1-x-y)}EuₓSm_{y}I₂₍₁₋ᵤ₋ᵥ₎Br₂ᵤCl₂ᵥ dans laquelle 0<x<0,2 , 0<y<0,1 , 0≤u<0,5 , 0≤v<0,5 , (u+v)>0 ;
- Sr_{(1-x-y)}EuₓSm_{y}I_{(2+q)(1-u-v)}Br_{((2+q)*u)}Cl_{((2+q)*v)} dans laquelle 0<x<0,2 , 0<y<0,1, 0≤u<0,5, 0≤v<0,5, -0,05<q<0,05 ;
- (Sr_{(1-z)}Ca_{z})_{(1-x-y)}EuₓSm_{y}I₂ dans laquelle 0<x<0,2 , 0<y<0,1 , 0≤z≤1,0 ;
- (Sr_{(1-z})Ca_{z})_{(1-x-y)}EuₓSm_{y}I₂₍₁₋ᵤ₋ᵥ₎Br₂ᵤCl₂ᵥ dans laquelle 0<x<0,2 , 0<y<0,1 , 0≤u≤1,0 , 0≤v≤1 , 0≤(u+v)≤1,0 , 0≤z≤1,0 ;
- (Sr_{(1-z)}Ca_{z})_{(1-x-y)}EuₓSm_{y}I_{(2+q)(1-u-v)}Br_{((2+q)*u)}Cl_{((2+q)*v)} dans laquelle 0<x<0,2 , 0<y<0,1 , 0≤u≤1,0 , 0≤v≤1,0 , 0≤(u+v)≤1,0 , -0,05<q<0,05 et 0≤z≤1,0 ;
- (Eu₍₁₋ₓ₎Ybₓ)_{(1-y)}Sm_{y}I_{(2+q)(1-u-v)}Br_{((2+q)*u)}Cl_{((2+q)*v)}, dans laquelle 0≤x≤1,0 , 0<y<0,1 , 0≤u≤1,0 , 0≤v≤1,0 , 0≤(u+v)≤1,0 , -0,05<q<0,05 ;
ou l'un de ceux des formules suivantes :
- AB_{(1-x-y)}CₓSm_{y} I_{(3+q)(1-u-v)}Br_{((3+q)*u)}Cl_{((3+q)*v)}, dans laquelle 0<x<0,2 , 0<y<0,1, 0≤u≤1,0 , 0≤v≤1,0 , 0≤u+v)≤1,0 , -0,05<q<0,05 ;
- A₂B_{(1-x-y)}CₓSm_{y} I_{(4+q)(1-u-v)}Br_{((4+q)*u)}Cl_{((4+q)*v)}, dans laquelle 0<x<0,2 , 0<y<0,1 , 0≤u≤1,0 , 0≤v≤1,0 , 0≤(u+v)≤1,0 , -0,1<q<0,1 ;
- AB_{2(1-x-y)}C₂ₓSm_{2y} I_{(5+q)(1-u-v)}Br_{((5+q)*u)}Cl_{((5+q)*v)}, dans laquelle 0<x<0,2 , 0<y<0,1 , 0≤u≤1,0 , 0≤v≤1,0 , 0≤(u+v)≤1,0 , -0,1<q<0,1 ;
avec la convention que dans les trois dernières formules, la lettre A représente un élément ou un mélange d'éléments choisi parmi Na, K, Cs, Rb, la lettre B représente un élément ou un mélange d'éléments choisi parmi Ca, Mg, Ba, Sr, et la lettre C (sauf bien entendu celle dans Cl qui représente le chlore) un élément ou un mélange d'éléments choisi parmi Eu²⁺, Yb²⁺ .

Dans les dix formules ci-dessus, généralement x>0,002 et généralement x<0,1. Dans les dix formules ci-dessus, généralement y>0,0001 et généralement y>0,001. Dans les dix formules ci-dessus, généralement y<0,02. Dans ces formules, le symbole « ≤ » signifie « inférieur ou égal et le symbole « < » signifie « strictement inférieur ». Notons, à titre d'exemple, que y<0,02 est équivalent à dire que Sm²⁺ est à moins de 2 mol% dans l'halogénure.

Le matériau scintillateur selon l'invention peut comprendre ou être de l'iodure de strontium comprenant Eu²⁺ en tant que dopant activateur de sa scintillation et co-dopé par Sm²⁺.

Le matériau scintillateur selon l'invention peut comprendre ou être de l'iodure de strontium et être dopé par Yb²⁺ en tant qu'activateur de scintillation et co-dopé par Sm²⁺.

Le matériau scintillateur selon l'invention peut être polycristallin mais est de préférence monocristallin. Un monocristal peut être obtenu par un procédé de croissance monocristalline bien connu de l'homme du métier tel que la technique Czochralski ou Bridgman ou Bagdasarov (technique Bridgman horizontale) ou Kyropoulos ou encore la technique du « Vertical Gradient Freeze » ( cristallisation par contrôle de gradient thermique) ou celle dite EFG (Edge Feeding Growth) ou encore celle dite de l'alimentation continue (« continuous feeding » en anglais) ce qui recouvre l'utilisation de multicreusets, en particulier la croissance de cristaux en double creuset, l'un des creuset se trouvant dans l'autre. L'invention concerne également un procédé de fabrication du matériau selon l'invention, comprenant sa croissance cristalline selon la technique Czochralski ou Bridgman ou Bagdasarov ou Kyropoulos ou de cristallisation par contrôle de gradient thermique ou de EFG. L'invention concerne également un détecteur de radiations ionisantes comprenant le matériau scintillateur selon l'invention. Notamment, le détecteur comprend de préférence un photo-détecteur sensible à une longueur d'onde supérieure à 670 nm, en particulier sensible à 770 nm.

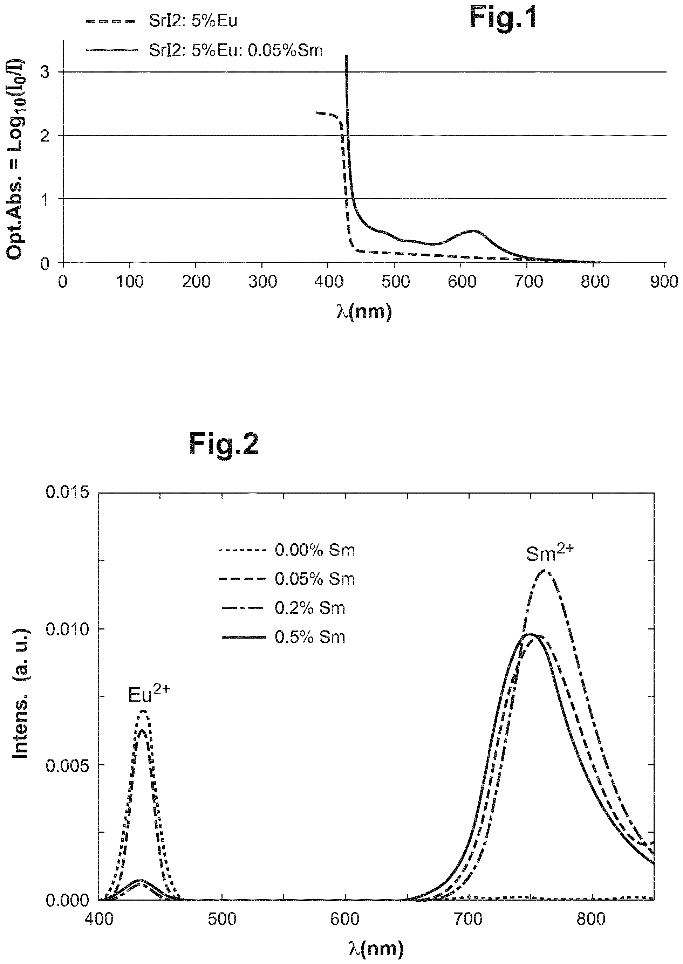

La figure 1 représente l'absorbance optique d'un cristal de SrI₂:5mol%Eu d'une part et celle d'un cristal de SrI₂:5mol%Eu:0,05mol%Sm d'autre part, en fonction de la longueur d'onde λ en nm. L'absorbance est égale au logarithme décimal du rapport entre l'intensité lumineuse incidente I₀ et l'intensité lumineuse émergente I. On voit que l'absorbance optique des deux cristaux est très élevée au voisinage de 430 nm et quasi-nulle au-dessus de 700 nm.

### EXEMPLES 1 à 5

On a réalisé des monocristaux de SrI₂:Eu²⁺,Sm²⁺ par croissance cristalline du type Bridgman vertical en ampoule de quartz scellée. Pour ce faire on a placé dans l'ampoule un mélange de poudres de SrI₂, EuI₂, SmI₂ dans les proportions souhaitées. On a ensuite chauffé ce mélange jusqu'à sa fusion, à environ 700°C. Les échantillons contenaient 5 mol% Eu²⁺, et selon l'échantillon, 0 ou 0,05 ou 0,2 ou 0,5 mol% de Sm²⁺. Des lingots (« ingots » en anglais) étaient préparés puis clivés pour ménager une surface de couplage plane avec le photo-détecteur. En raison de la nature hygroscopique des échantillons, ceux-ci étaient manipulés en boîte à gant sous atmosphère d'azote sec, contenant moins de 1 ppm d'eau. Les pourcentages sont donnés en mol%.

L'intensité de scintillation a été enregistrée dans la boîte à gants en utilisant une source gamma de ¹³⁷Cs à 662 keV. On a utilisé comme photo-détecteur une photodiode à avalanche Photonix APD (type 630-70-72-510) sans fenêtre, sous 1600 V de tension et refroidie à 250 K. Le signal de sortie a été amplifié avec des conditions de « shaping time » de 6 µs par un amplificateur spectroscopique ORTEC 672. Afin de maximiser la collecte de lumière, les échantillons ont été enveloppés de poudre de Téflon puis comprimés (selon la technique décrite dans J. T. M. de Haas and P. Dorenbos, IEEE Trans. Nucl. Sci. 55, 1086 (2008)), hormis la face clivée destinée au couplage avec la photodiode.

Les intensités lumineuses de cristaux d'environ 2 mm de diamètre et de hauteur soumis à un rayonnement gamma à 662 keV sont rassemblées dans le tableau 1. Notons que pour de telles petites dimensions, l'auto-absorption est négligeable et les résultats expriment donc bien l'intensité du phénomène de scintillation. Dans ce tableau, les compositions sont décrites comme comprenant une matrice dopée par un dopant Eu²⁺ (absent pour l'exemple 5 comparatif) et co-dopée par un co-dopant Sm²⁺ (absent pour l'exemple 1 comparatif).

**Tableau 1**

| Ex n° | Matrice | [Eu²⁺] (mol%) | [Sm²⁺] (mol%) | Intensité lumineuse (ph/MeV) | Long. d'onde d'émission Eu²⁺ (nm) | Long. d'onde d'émission Sm²⁺ (nm) |
|---|---|---|---|---|---|---|
| 1 (comp) | SrI₂ | 5 | 0 | 40500 | 431 | |
| 2 | | 5 | 0,05 | 39500 | 431 | 750 |
| 3 | | 5 | 0,2 | 33000 | 431 | 750 |
| 4 | | 5 | 0,5 | 42000 | 431 | 750 |
| 5 (comp) | SrI₂ | 0 | 1 | 6000 | | 750 |

L'excitation de photoluminescence et le spectre d'émission ont été enregistrés par utilisation d'une lampe Xe UV Newport 66921 en combinaison avec un monochromateur à double réseaux Horiba Gemini-180. La lumière d'émission des cristaux était détectée par une caméra Hamamatsu C9100-13 EM-CCD. Le spectre d'excitation était corrigé pour tenir compte du spectre de la lampe UV, sans autre correction pour le spectre d'émission. Le spectre d'émission de lumière en fonction de la teneur en Sm²⁺ est visible sur la figure 2. On distingue bien les pics de Eu²⁺ et de Sm²⁺. Le pic de Eu²⁺ est rapidement réduit avec la présence d'un peu de Sm²⁺ à cause du transfert d'énergie présumé de Eu²⁺ vers Sm²⁺. La capture du porteur de charge (électrons et trous) par Eu²⁺ transpose les Eu²⁺ dans un état excité 5d. Cette énergie d'excitation peut être transférée dans le voisinage des Sm²⁺ par un processus radiatif ou non-radiatif de transfert d'énergie. Ainsi, au-delà de 1 mol% en Sm²⁺, l'émission consiste quasi-exclusivement en une émission Sm²⁺. Le co-dopage de SrI₂ :Eu par Sm²⁺ mène donc à un scintillateur à forte intensité lumineuse à plus de 700 nm, ce qui est remarquable et très avantageux compte tenu de la très faible auto-absorbance des cristaux à ces longueurs d'onde.

### EXEMPLES 6 à 9

On a fabriqué des monocristaux comme pour les exemples précédents sauf que les compositions étaient celles indiquées dans le tableau 2. Les compositions sont décrites comme comprenant une matrice dopée par un dopant Eu²⁺ (absent pour l'exemple 7 comparatif) et co-dopée par un co-dopant Sm²⁺.

**Tableau 2**

| Ex n° | Matrice | Dopant [Eu²⁺] (mol%) | Co-dopant [Sm²⁺] (mol%) | Intensité lumineuse (ph/MeV) | Résolution Énergétique (%) | Long. d'Onde d'émission Eu²⁺ | Long. d'Onde d'émission Sm²⁺ |
|---|---|---|---|---|---|---|---|
| 6 | CsBa₂I₅ | 4 | 1 | 52000 | 4,5 | 422 | 758 |
| 7 (comp) | CsBa₂I₅ | 0 | 0,5 | 20500 | 14,8 | 422 | 758 |
| 8 | CsBa₂I₅ | 2 | 1 | 45800 | 3,2 | 422 | 758 |
| 9 | CsSrI₃ | 2 | 1 | 19100 | 9,7 | 454 | 839 |

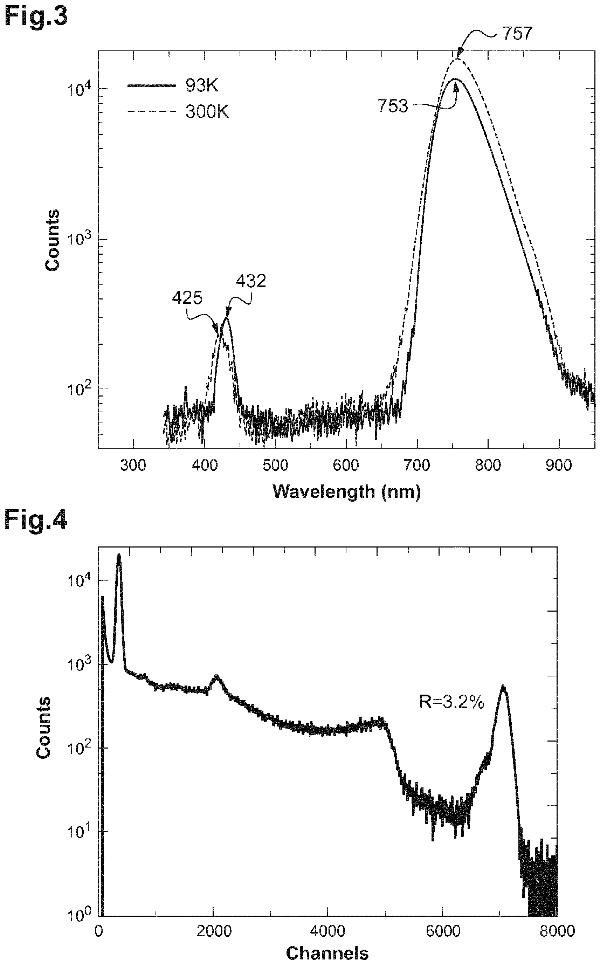

Le spectre d'émission de lumière relatif à l'échantillon de l'exemple 8 est visible sur la figure 3, mesuré à deux températures d'échantillon différentes, 93K et 300K. On distingue bien les pics de Eu²⁺ et de Sm²⁺, et ce pour les 2 cas de température.

Les bonnes propriétés de résolution énergétique de l'échantillon de l'exemple 8 sont illustrées par la figure 4. On y a représenté l'histogramme de scintillation, avec en abscisse des valeurs proportionnelles à la quantité de lumière émise détectée par le dispositif optique (mesuré avec une source isotopique ¹³⁷Cs avec un détecteur Advanced Photonix APD 630-70-72-510, ledit détecteur étant à la température de 270K), et en ordonnées les nombres d'événements d'interaction photons gamma avec le scintillateur. On y voit la formation d'un pic de scintillation avec la résolution énergétique 3,2%, ce qui est remarquable et bien adapté pour les scintillateurs à propriété spectrométrique, notamment utilisés dans les détecteurs portables de contrôle d'environnement.

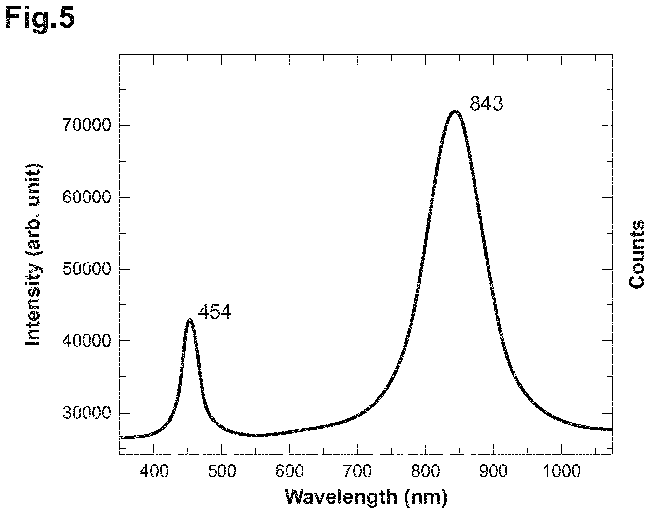

Le spectre d'émission de lumière relatif à l'échantillon de l'exemple 9 est visible sur la figure 5, mesuré à température d'échantillon ambiante. On distingue bien les pics de Eu²⁺ et de Sm²⁺. On remarque l'intensité très élevée dans le domaine infra-rouge au maximum à 843 nm correspondant à l'émission du Sm²⁺. Le pic à 454 nm correspond à l'émission de Eu²⁺. On voit une dominance de l'émission Sm²⁺ en raison du transfert d'énergie venant de Eu²⁺.

## Revendications

1. Matériau scintillateur pour détecteur de radiations ionisantes comprenant un halogénure d'alcalino-terreux cristallin comprenant au moins un alcalino-terreux choisi parmi Mg, Ca, Sr, Ba, ledit halogénure d'alcalino-terreux étant dopé par au moins un dopant activateur de sa scintillation distinct de Sm²⁺, et co-dopé par Sm²⁺, ledit halogénure d'alcalino-terreux comprenant au moins un halogène choisi parmi Br, Cl, I, au moins 60 mol%, et de préférence au moins 80 mol%, des atomes d'halogène de l'halogénure d'alcalino-terreux étant choisis parmi Br, Cl, I.

2. Matériau selon la revendication précédente, **caractérisé en ce que** l'halogénure d'alcalino-terreux comprend au moins deux halogènes choisis parmi Br, Cl, I.

3. Matériau selon la revendication précédente, **caractérisé en ce que** l'halogénure d'alcalino-terreux ne comprend pas F.

4. Matériau selon l'une des revendications précédentes, **caractérisé en ce que** l'halogénure d'alcalino-terreux est dopé par au moins un dopant activateur de sa scintillation choisi parmi Eu²⁺, Ce³⁺, Pr³⁺, Tl⁺, Yb²⁺.

5. Matériau selon l'une des revendications précédentes, **caractérisé en ce que** au moins un dopant activateur de sa scintillation distinct de Sm²⁺, est présent dans l'halogénure d'alcalino-terreux à raison de plus de 0,2 mol%.

6. Matériau selon l'une des revendications précédentes, **caractérisé en ce que** au moins un dopant activateur de sa scintillation distinct de Sm²⁺, est présent dans l'halogénure d'alcalino-terreux à raison de moins de 20 mol% et généralement de moins de 10 mol %.

7. Matériau selon l'une des revendications précédentes, **caractérisé en ce que** Eu²⁺ est présent dans l'halogénure d'alcalino-terreux en tant que dopant activateur de sa scintillation, notamment à raison de plus de 0,2 mol% et de moins de 20 mol%, généralement de moins de 10 mol%.

8. Matériau selon l'une des revendications précédente, **caractérisé en ce que** Sm²⁺ est présent dans l'halogénure d'alcalino-terreux à raison de plus de 0,01 mol% et généralement de plus de 0,1 mol%.

9. Matériau selon l'une des revendications précédente, **caractérisé en ce que** Sm²⁺ est présent dans l'halogénure d'alcalino-terreux à raison de moins de 10 mol%, notamment de moins de 2 mol%.

10. Matériau selon l'une des revendications précédentes, **caractérisé en ce que** l'halogénure d'alcalino-terreux comprend de l'iodure de strontium.

11. Matériau selon la revendication précédente, **caractérisé en ce qu'**il comprend Eu²⁺ en tant que dopant activateur de sa scintillation.

12. Matériau selon la revendication 1, **caractérisé en ce que** l'halogénure d'alcalino-terreux comprend de l'iodure de strontium, Eu²⁺ étant présent en tant que dopant activateur de scintillation dans l'halogénure d'alcalino-terreux à raison de plus de 0,2 mol% et généralement de moins de 20 mol%, plus généralement de moins de 10 mol%, Sm²⁺ étant présent dans l'halogénure d'alcalino-terreux à raison de plus de 0,01 mol% et généralement de plus de 0,1 mol% et généralement de moins de 10 mol% et plus généralement de moins de 2 mol%.

13. Matériau selon la revendication 1, **caractérisé en ce que** sa formule est l'une de celles de la liste suivante :
- Sr_{(1-x-y)}EuₓSm_{y}I₂ dans laquelle 0<x<0,2 et 0<y<0,1 ;
- Sr_{(1-x-y)}EuₓSm_{y}I₂₍₁₋ᵤ₋ᵥ₎Br₂ᵤCl₂ᵥ dans laquelle 0<x<0,2 , 0<y<0,1 , 0≤u<0,5 , 0≤v<0,5 , (u+v)>0 ;
- Sr_{(1-x-y)}EuₓSm_{y}I_{(2+q)(1-u-v)}Br_{((2+q)*u)}Cl_{((2+q)*v)} dans laquelle 0<x<0,2 , 0<y<0,1, 0≤u<0,5, 0≤v<0,5, -0,05<q<0,05 ;
- (Sr_{(1-z)}Ca_{z})_{(1-x-y)}EuₓSm_{y}I₂ dans laquelle 0<x<0,2 , 0<y<0,1 , 0≤z≤1,0 ;
- (Sr_{(1-z)}Ca_{z})_{(1-x-y)}EuₓSm_{y}I₂₍₁₋ᵤ₋ᵥ₎Br₂ᵤCl₂ᵥ dans laquelle 0<x<0,2 , 0<y<0,1 , 0≤u≤1,0 , 0≤v≤1 , 0≤(u+v)≤1,0 , 0≤z≤1,0 ;
- (Sr_{(1-z)}Ca_{z})_{(1-x-y)}EuₓSm_{y}I_{(2+q)(1-u-v)}Br_{((2+q)*u)}Cl_{((2+q)*v)} dans laquelle 0<x<0,2 , 0<y<0,1 , 0≤u≤1,0 , 0≤v≤1,0 , 0≤(u+v)≤1,0 , -0,05<q<0,05 et 0≤z≤1,0 ;
- (Eu₍₁₋ₓ₎Ybₓ)_{(1-y})Sm_{y}I_{(2+q)(1-u-v)}Br_{((2+q)*u)}Cl_{((2+q)*v)}, dans laquelle 0≤x≤1,0 , 0<y<0,1 , 0≤u≤1,0 , 0≤v≤1,0 , 0≤(u+v)≤1,0 , -0,05<q<0,05 ;
ou l'un de ceux des formules suivantes :
- AB_{(1-x-y)}CₓSm_{y} I_{(3+q)(1-u-v)}Br_{((3+q)*u)}Cl_{((3+q)*v)}, dans laquelle 0<x<0,2 , 0<y<0,1, 0≤u≤1,0 , 0≤v≤1,0 , 0≤(u+v)≤1,0 , -0,05<q<0,05 ;
- A₂B_{(1-x-y)}CₓSm_{y} I_{(4+q)(1-u-v)}Br_{((4+q)*u)}Cl_{((4+q)*v)}, dans laquelle 0<x<0,2 , 0<y<0,1 , 0≤u≤1,0 , 0≤v≤1,0 , 0≤(u+v)≤1,0 , -0,1<q<0,1 ;
- AB_{2(1-x-y)}C₂ₓSm_{2y} I_{(5+q)(1-u-v)}Br_{((5+q)*u)}Cl_{((5+q)*v)}, dans laquelle 0<x<0,2 , 0<y<0,1 , 0≤u≤1,0 , 0≤v≤1,0 , 0≤u+v)≤1,0 , -0,1<q<0,1 ;
avec la convention que dans les trois dernières formules, la lettre A représente un élément ou un mélange d'éléments choisi parmi Na, K, Cs, Rb, la lettre B représente un élément ou un mélange d'éléments choisi parmi Ca, Mg, Ba, Sr, et la lettre C représente un élément ou un mélange d'éléments choisi parmi Eu²⁺, Yb²⁺.

14. Matériau selon l'une des revendications précédentes, **caractérisé en ce que** son coefficient d'absorption optique est inférieur à 50% pour la longueur d'onde à laquelle son émission de scintillation est maximale.

15. Matériau selon l'une des revendications précédentes, **caractérisé en ce que** son volume est supérieur à 1 cm³.

16. Matériau selon l'une des revendications précédentes, **caractérisé en ce que** son épaisseur est d'au moins 1,8 mm dans toutes les directions, et généralement d'au moins 2,0 mm dans toutes les directions.

17. Matériau selon l'une des revendications précédentes, **caractérisé en ce qu'**il est transparent pour sa propre lumière émise à au moins 2 mm de profondeur et généralement au moins 4 mm de profondeur.

18. Matériau selon l'une des revendications précédentes, **caractérisé en ce qu'**il est monocristallin.

19. Procédé de fabrication du matériau de la revendication précédente, comprenant sa croissance cristalline selon la technique Czochralski ou Bridgman ou Bagdasarov ou Kyropoulos ou de cristallisation par contrôle de gradient thermique ou de EFG.

20. Détecteur de radiations ionisantes comprenant le matériau de l'une des revendications de matériau précédentes.

21. Détecteur selon la revendication précédente, **caractérisé en ce qu'**il comprend un photo-détecteur sensible à une longueur d'onde supérieure à 670 nm, notamment à 770 nm.

## Patentansprüche

1. Szintillatormaterial für Detektor ionisierender Strahlungen, umfassend ein kristallines Erdalkalihalogenid, umfassend mindestens ein Erdalkali, ausgewählt aus Mg, Ca, Sr, Ba, wobei das Erdalkalihalogenid mit mindestens einem seine Szintillation aktivierenden Dotierstoff dotiert ist, der von Sm²⁺ verschieden ist, und mit Sm²⁺ co-dotiert ist, wobei das Erdalkalihalogenid mindestens ein Halogen umfasst, ausgewählt aus Br, Cl, I, wobei mindestens 60 Mol-% und vorzugsweise mindestens 80 Mol-% der Halogenatome des Erdalkalihalogenids ausgewählt sind aus Br, Cl, I.

2. Material nach dem vorstehenden Anspruch, **dadurch gekennzeichnet, dass** das Erdalkalihalogenid mindestens zwei Halogene umfasst, ausgewählt aus Br, Cl, I.

3. Material nach dem vorstehenden Anspruch, **dadurch gekennzeichnet, dass** das Erdalkalihalogenid kein F umfasst.

4. Material nach einem der vorstehenden Ansprüche, **dadurch gekennzeichnet, dass** das Erdalkalihalogenid mit mindestens einem seine Szintillation aktivierenden Dotierstoff dotiert ist, ausgewählt aus Eu²⁺, Ce³⁺, Pr³⁺, Tl⁺, Yb²⁺.

5. Material nach einem der vorstehenden Ansprüche, **dadurch gekennzeichnet, dass** mindestens ein seine Szintillation aktivierender Dotierstoff, der von Sm²⁺ verschieden ist, in dem Erdalkalihalogenid mit einem Mengenanteil von mehr als 0,2 Mol-% vorhanden ist.

6. Material nach einem der vorstehenden Ansprüche, **dadurch gekennzeichnet, dass** mindestens ein seine Szintillation aktivierender Dotierstoff, der von Sm²⁺ verschieden ist, in dem Erdalkalihalogenid mit einem Mengenanteil von weniger als 20 Mol-% und im Allgemeinen weniger als 10 Mol-% vorhanden ist.

7. Material nach einem der vorstehenden Ansprüche, **dadurch gekennzeichnet, dass** Eu²⁺ in dem Erdalkalihalogenid als seine Szintillation aktivierender Dotierstoff vorhanden ist, insbesondere mit einem Mengenanteil von mehr als 0,2 Mol-% und weniger als 20 Mol-%, im Allgemeinen weniger als 10 Mol-%.

8. Material nach einem der vorstehenden Ansprüche, **dadurch gekennzeichnet, dass** Sm²⁺ in dem Erdalkalihalogenid mit einem Mengenanteil von mehr als 0,01 Mol-% und im Allgemeinen mehr als 0,1 Mol-% vorhanden ist.

9. Material nach einem der vorstehenden Ansprüche, **dadurch gekennzeichnet, dass** Sm²⁺ in dem Erdalkalihalogenid mit einem Mengenanteil von weniger als 10 Mol-%, insbesondere weniger als 2 Mol-%, vorhanden ist.

10. Material nach einem der vorstehenden Ansprüche, **dadurch gekennzeichnet, dass** das Erdalkalihalogenid Strontiumiodid umfasst.

11. Material nach dem vorstehenden Anspruch, **dadurch gekennzeichnet, dass** es Eu²⁺ als seine Szintillation aktivierenden Dotierstoff umfasst.

12. Material nach Anspruch 1, **dadurch gekennzeichnet, dass** das Erdalkalihalogenid Strontiumiodid umfasst, Eu²⁺ in dem Erdalkalihalogenid als Szintillation aktivierender Dotierstoff mit einem Mengenanteil von mehr als 0,2 Mol-% und im Allgemeinen weniger als 20 Mol-%, allgemeiner weniger als 10 Mol-%, vorhanden ist, Sm²⁺ in dem Erdalkalihalogenid mit einem Mengenanteil von mehr als 0,01 Mol-% und im Allgemeinen mehr als 0,1 Mol-% und im Allgemeinen weniger als 10 Mol-% und allgemeiner weniger als 2 Mol-% vorhanden ist.

13. Material nach Anspruch 1, **dadurch gekennzeichnet, dass** seine Formel eine von jenen aus folgender Liste:
- Sr_{(1-x-y)}EuₓSm_{y}I₂, wobei 0 < x < 0,2 und 0 < y < 0,1;
- Sr_{(1-x-y)}EuₓSm_{y}I₂₍₁₋ᵤ₋ᵥ₎Br₂ᵤCl₂ᵥ, wobei 0 < x < 0,2, 0 < y < 0,1, 0 ≤ u < 0,5, 0 ≤ v < 0,5, (u + v) > 0;
- Sr_{(1-x-y)}EuₓSm_{y}I_{(2+q)(1-u-v)}Br_{((2+q)*u)}Cl_{((2+q)*v)}, wobei 0 < x < 0,2, 0 < y < 0,1, 0≤ u < 0,5, 0 ≤ v < 0,5, -0,05 < q < 0,05;
- (Sr_{(1-z)}Ca_{z})_{(1-x-y)}EuₓSm_{y}I₂, wobei 0 < x < 0,2, 0 < y < 0,1, 0 ≤ z ≤ 1,0;
- (Sr_{(1-z)}Ca_{z})_{(1-x-y)}EuₓSm_{y}I₂₍₁₋ᵤ₋ᵥ₎Br₂ᵤCl₂ᵥ, wobei 0 < x < 0,2, 0 < y < 0,1, 0 ≤ u ≤ 1,0, 0 ≤ v ≤ 1, 0 ≤ (u + v) ≤ 1,0, 0 ≤ z ≤ 1,0;
- (Sr_{(1-z)}Ca_{z})_{(1-x-y)}EuₓSm_{y}I_{(2+q)(1-u-v)}Br_{((2+q)*u)}Cl_{((2+q)*v)}, wobei 0 < x < 0,2, 0 ≤ y < 0,1, 0 ≤ u ≤ 1,0, 0 ≤ v ≤ 1,0, 0 ≤ (u + v) ≤ 1,0, -0,05 < q < 0,05 und 0 ≤ z ≤ 1,0;
- (Eu₍₁₋ₓ₎Ybₓ)_{(1-y)}Sm_{y}I_{(2+q)(1-u-v)}Br_{((2+q)*u)}Cl_{((2+q)*v)}, wobei 0 ≤ x ≤ 1,0, 0 < y < 0,1, 0 ≤ u ≤ 1,0, 0 ≤ v ≤ 1,0, 0 ≤ (u + v) ≤ 1,0, -0,05 < q < 0,05;
oder eine von jenen der folgenden Formeln ist:
- AB_{(1-x-y)}CₓSm_{y}I_{(3+q)(1-u-v)}Br_{((3+q)*u)}Cl_{((3+q)*v)}, wobei 0 < x < 0,2, 0 < y < 0,1, 0 ≤ u ≤ 1,0, 0 ≤ v ≤ 1,0, 0 ≤ (u + v) ≤ 1,0, -0,05 < q < 0,05;
- A₂B_{(1-x-y)}CₓSm_{y}I_{(4+q)(1-u-v)}Br_{((4+q)*u)}Cl_{((4+q)*v)}, wobei 0 < x < 0,2, 0 < y < 0,1, 0 ≤ u ≤ 1,0, 0 ≤ v ≤ 1,0, 0 ≤ (u + v) ≤ 1,0, -0,1< q < 0,1;
- AB_{2(1-x-y)}C₂ₓSm_{2y}I_{(5+q)(1-u-v)}Br_{((5+q)*u)}Cl_{((5+q)*v)}, wobei 0 < x < 0,2, 0 < y < 0,1, 0 ≤ u ≤ 1,0, 0 ≤ v ≤ 1,0, 0 ≤ (u + v) ≤ 1,0, -0,1< q < 0,1;
mit der Konvention, dass in den letzten drei Formeln der Buchstabe A ein Element oder eine Mischung von Elementen repräsentiert, ausgewählt aus Na, K, Cs, Rb, der Buchstabe B ein Element oder eine Mischung von Elementen repräsentiert, ausgewählt aus Ca, Mg, Ba, Sr, und der Buchstabe C ein Element oder eine Mischung von Elementen repräsentiert, ausgewählt aus Eu²⁺, Yb²⁺.

14. Material nach einem der vorstehenden Ansprüche, **dadurch gekennzeichnet, dass** sein optischer Absorptionskoeffizient für die Wellenlänge, bei der seine Szintillationsemission maximal ist, weniger als 50 % beträgt.

15. Material nach einem der vorstehenden Ansprüche, **dadurch gekennzeichnet, dass** sein Volumen größer als 1 cm³ ist.

16. Material nach einem der vorstehenden Ansprüche, **dadurch gekennzeichnet, dass** seine Dicke in allen Richtungen mindestens 1,8 mm und im Allgemeinen in allen Richtungen mindestens 2,0 mm beträgt.

17. Material nach einem der vorstehenden Ansprüche, **dadurch gekennzeichnet, dass** es für sein eigenes Licht, das in mindestens 2 mm Tiefe und im Allgemeinen mindestens 4 mm Tiefe emittiert wird, transparent ist.

18. Material nach einem der vorstehenden Ansprüche, **dadurch gekennzeichnet, dass** es monokristallin ist.

19. Verfahren zum Herstellen des Materials nach dem vorstehenden Anspruch, umfassend sein Kristallwachstum nach der Czochralski- oder Bridgman- oder Bagdasarov- oder Kyropoulos-Technik oder durch Kristallisation durch Kontrolle des Wärmegradienten oder durch EFG.

20. Detektor ionisierender Strahlungen, umfassend das Material eines der vorstehenden Materialansprüche.

21. Detektor nach dem vorstehenden Anspruch, **dadurch gekennzeichnet, dass** er einen bei einer Wellenlänge von mehr als 670 nm, insbesondere 770 nm, empfindlichen Fotodetektor umfasst.

## Claims

1. A scintillator material for an ionizing radiation detector comprising a crystalline alkaline-earth metal halide comprising at least one alkaline-earth metal selected from Mg, Ca, Sr, Ba, said alkaline-earth metal halide being doped with at least one dopant that activates the scintillation thereof other than Sm²⁺, and co-doped with Sm²⁺, said alkaline-earth metal halide comprising at least one halogen selected from Br, Cl, I, at least 60 mol%, and more preferably at least 80 mol%, of the halogen atoms of the alkaline-earth metal halide are selected from Br, Cl, I.

2. The material as claimed in the preceding claim, **characterized in that** the alkaline-earth metal halide comprises at least two halogens selected from Br, Cl, I.

3. The material as claimed in the preceding claim, **characterized in that** the alkaline-earth metal halide does not comprise F.

4. The material as claimed in one of the preceding claims, **characterized in that** the alkaline-earth metal halide is doped with at least one dopant that activates the scintillation thereof selected from Eu²⁺, Ce³⁺, Pr³⁺, Tl⁺, Yb²⁺.

5. The material as claimed in one of the preceding claims, **characterized in that** at least one dopant that activates the scintillation thereof other than Sm²⁺ is present in the alkaline-earth metal halide in a proportion of more than 0.2 mol%.

6. The material as claimed in one of the preceding claims, **characterized in that** at least one dopant that activates the scintillation thereof other than Sm²⁺ is present in the alkaline-earth metal halide in a proportion of less than 20 mol% and generally of less than 10 mol%.

7. The material as claimed in one of the preceding claims, **characterized in that** Eu²⁺ is present in the alkaline-earth metal halide as dopant that activates the scintillation thereof, in particular in a proportion of more than 0.2 mol% and of less than 20 mol%, generally of less than 10 mol%.

8. The material as claimed in one of the preceding claims, **characterized in that** Sm²⁺ is present in the alkaline-earth metal halide in a proportion of more than 0.01 mol% and generally of more than 0.1 mol%.

9. The material as claimed in one of the preceding claims, **characterized in that** Sm²⁺ is present in the alkaline-earth metal halide in a proportion of less than 10 mol%, in particular of less than 2 mol%.

10. The material as claimed in one of the preceding claims, **characterized in that** the alkaline-earth metal halide comprises strontium iodide.

11. The material as claimed in the preceding claim, **characterized in that** it comprises Eu²⁺ as dopant that activates the scintillation thereof.

12. The material as claimed in claim 1, **characterized in that** the alkaline-earth metal halide comprises strontium ionide, Eu²⁺ being present as scintillation activator dopant in the alkaline-earth metal halide in a proportion of more than 0.2 mol% and generally of less than 20 mol%, more generally of less than 10 mol%, Sm²⁺ being present in the alkaline-earth metal halide in a proportion of more than 0.01 mol% and generally of more than 0.1 mol% and generally of less than 10 mol% and more generally less than 2 mol%.

13. The material as claimed in claim 1, **characterized in that** the formula thereof is one of those from the following list:
- Sr_{(1-x-y)}EuₓSm_{y}I₂ wherein 0<x<0.2 and 0<y<0.1;
- Sr_{(1-x-y)}EuₓSm_{y}I₂₍₁₋ᵤ₋ᵥ₎Br₂ᵤCl₂ᵥ wherein 0<x<0.2, 0<y<0.1, 0≤u<0.5, 0≤v<0.5, (u+v)>0;
- Sr_{(1-x-y)}EuₓSm_{y} I_{(2+q)(1-u-v)}Br_{((2+q)*u)}Cl_{((2+q)*v)} wherein 0<x<0.2, 0<y<0.1, 0≤u<0.5, 0≤v<0.5, -0.05<q<0.05;
- (Sr_{(1-z)}Ca_{z})_{(1-x-y)}EuₓSm_{y}I₂ wherein 0<x<0.2, 0<y<0.1, 0≤z≤1.0;
- (Sr_{(1-z)}Ca_{z})_{(1-x-y)}EuₓSm_{y}I₂₍₁₋ᵤ₋ᵥ₎Br₂ᵤCl₂ᵥ wherein 0<x<0.2, 0<y<0.1, 0≤u≤1.0, 0≤v≤1.0, 0≤(u+v)≤1.0, 0≤z≤1.0;
- (Sr_{(1-z)}Ca_{z})_{(1-x-y)}EuₓSm_{y}I_{(2+q)(1-u-v)}Br(_{(2+q)*u)}Cl_{((2+q)*v)} wherein 0<x<0.2, 0<y<0.1, 0≤u≤1.0, 0≤v≤1.0, 0≤(u+v)≤1.0, -0.05<q<0.05 and 0≤z≤1.0;
- (Eu₍₁₋ₓ₎Ybₓ)_{(1-y)}Sm_{y}I_{(2+q)(1-u-v)}Br_{((2+q)*u)}Cl_{((2+q)*v)}, wherein 0≤x≤1.0, 0<y<0.1, 0≤u≤1.0, 0≤v≤1.0, 0≤(u+v)≤1.0, -0.05<q<0.05;
or one of those of the following formulae:
- AB_{(1-x-y)}CₓSm_{y} I_{(3+q)(1-u-v)}Br_{((3+q)*u)}Cl_{((3+q)*v)}, wherein 0<x<0.2, 0<y<0.1, 0≤u≤1.0, 0≤v≤1.0, 0≤(u+v)≤1.0, -0.05<q<0.05;
- A₂B_{(1-x-y)}CₓSm_{y} I_{(4+q)(1-u-v)}Br_{((4+q)*u)}Cl_{((4+q)*v)}, wherein 0<x<0.2, 0<y<0.1, 0≤u≤1.0, 0≤v≤1.0, 0≤(u+v)≤1.0, -0.1<q<0.1;
- AB_{2(1-x-y)}C₂ₓSm_{2y} I_{(5+q)(1-u-v)}Br_{((5+q)*u)}Cl_{((5+q)*v)}, wherein 0<x<0.2, 0<y<0.1, 0≤u≤1.0, 0≤v≤1.0, 0≤(u+v)≤1.0, -0.1<q<0.1;
with the convention that in the last three formulae, the letter A represents an element or a mixture of elements selected from Na, K, Cs, Rb, the letter B represents an element or a mixture of elements selected from Ca, Mg, Ba, Sr, and the letter C represents an element or a mixture of elements selected from Eu²⁺, Yb²⁺.

14. The material as claimed in one of the preceding claims, **characterized in that** its optical absorption coefficient is less than 50% for the wavelength at which the scintillation emission thereof is maximum.

15. The material as claimed in one of the preceding claims, **characterized in that** the volume thereof is greater than 1 cm³.

16. The material as claimed in one of the preceding claims, **characterized in that** the thickness thereof is at least 1.8 mm in all directions, and generally at least 2.0 mm in all directions.

17. The material as claimed in one of the preceding claims, **characterized in that** it is transparent for its own light emitted at at least 2 mm depth and generally at least 4 mm depth.

18. The material as claimed in one of the preceding claims, **characterized in that** it is monocrystalline.

19. A process for manufacturing the material of the preceding claim, comprising the crystalline growth thereof according to the Czochralski or Bridgman or Bagdasarov or Kyropoulos technique or the technique of crystallization by thermal gradient control or the EFG technique.

20. An ionizing radiation detector comprising the material of one of the preceding material claims.

21. The detector as claimed in the preceding claim, **characterized in that** it comprises a photodetector sensitive to a wavelength of greater than 670 nm, in particular at 770 nm.
